Europäisches Patentamt

European Patent Office

Office européen des brevets

(19)

(11)  EP 1 440 947 B1

(12)  EUROPEAN PATENT SPECIFICATION

(45)  Date of publication and mention
of the grant of the patent:
**19.10.2005  Bulletin 2005/42**

(51)  Int Cl.⁷: **C03B 37/012**, C03B 37/018,
C03B 37/014

(21)  Application number: **04000610.8**

(22)  Date of filing: **14.01.2004**

(54)  **Method of producing optical fibers and preforms starting from a glass tube**

Verfahren zur Herstellung optischer Fasern und Vorformen ausgehend von einem Glasrohr

Procédé de fabrication de fibres et préformes optiques à partir d'un tube de verre

(84)  Designated Contracting States:
**DE DK FR GB IT**

(30)  Priority:  **16.01.2003  JP 2003008627**

(43)  Date of publication of application:
**28.07.2004  Bulletin 2004/31**

(73)  Proprietor: **Sumitomo Electric Industries, Ltd.**
**Osaka-shi, Osaka 541-0041 (JP)**

(72)  Inventors:
 • **Hirano, Masaaki**
   **Sakae-ku Yokohama-shi Kanagawa (JP)**
 • **Moriya, Tomomi**
   **Sakae-ku Yokohama-shi Kanagawa (JP)**
 • **Ijiri, Hideyuki**
   **Sakae-ku Yokohama-shi Kanagawa (JP)**
 • **Hasegawa, Shinji**
   **Sakae-ku Yokohama-shi Kanagawa (JP)**
 • **Sasaki, Takashi**
   **Sakae-ku Yokohama-shi Kanagawa (JP)**
 • **Taru, Toshiki**
   **Sakae-ku Yokohama-shi Kanagawa (JP)**

(74)  Representative: **HOFFMANN EITLE**
**Patent- und Rechtsanwälte**
**Arabellastrasse 4**
**81925 München (DE)**

(56)  References cited:
**EP-A- 0 718 244**          **EP-A- 0 887 670**
**WO-A-02/060830**       **WO-A-02/098806**
**US-A1- 2002 102 083**

## Description

BACKGROUND OF THE INVENTION

Field of the Invention

The present invention relates to a method of producing an optical fiber preform with the collapsing process and to an optical fiber preform.

Description of the Background Art

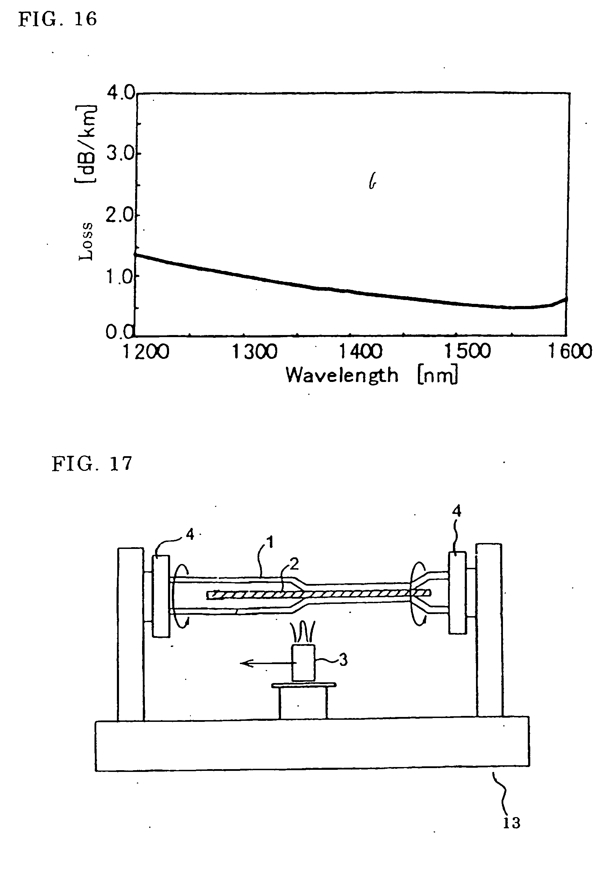

The collapsing process is a process to produce an optical fiber preform by collapsing a glass pipe to form a solid body. The collapsing operation may be performed with a glass rod inserted into a glass pipe. In this case, the glass pipe and the glass rod are unified. Figure 17 is a schematic diagram showing the collapsing process. A glass rod 2 is inserted in a glass pipe 1. The glass pipe 1 is held by holding portions 4 of a glass-processing lathe 13. While the glass pipe 1 is rotated together with the glass rod 2, one end of the glass pipe is sealed by heating it with a heat source 3. Then, the heat source 3 is moved to collapse the glass pipe by heating it. The following techniques are also known: (a) Before the collapsing operation, the surface of the glass is chemically purified by heating the glass pipe 1 while a chlorine gas is blown into it. (b) The collapsing operation is performed while the inside of the glass pipe 1 is evacuacted with a vacuum pump. (Scc the published Japanese patent application *Tokukaihei* 8-225335.)

Phenomena of occlusion of water into silica glass and its release are explained in a reference book entitled "Application handbook for amorphous silica materials" (compiled by *Katsuro Fukamizu,* published by Realize Co., 1999, pp. 56-57). Phenomena of diffusion of water into silica glass are explained in a report by *Hajimu Wakabayashi* and *Minoru Tomozawa*. "Diffusion of water into silica glass at low temperature" (J. Am. Ceram. Soc., Vol. 72, No. 10, pp-1850-55, 1989).

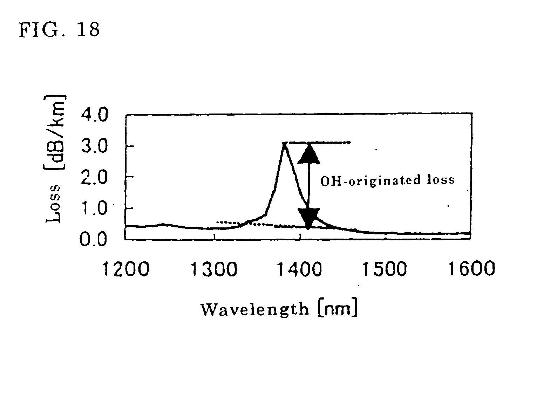

Figure 18 is a graph showing an increment in transmission loss at a 1.4 μm wavelength band due to OH groups. OH groups in silica glass have a high ab sorption peak (OH absorption) in the vicinity of 1.4 μm in wavelength. The OH absorption increases the transmission loss at a 1.4-μm band (OH-originated loss) and makes it difficult to transmit signals in the 1.4-μm hand and excitation light for Raman amplification. Therefore, it is desirable to minimize the OH absorption. However, when an optical fiber preform is produced with the collapsing process, it has been difficult to reduce the OH absorption.

SUMMARY OF THE INVENTION

An object of the present invention is to offer a method of producing with the collapsing process an optical fiber preform capable of forming an optical fiber in which an increment in transmission loss due to the OH absorption is reduced.

The foregoing object is attained by the method of producing an optical fiber preform according to claim 1.
The optical fiber preform's portion formed by the interface portion at the time of the collapsing contains OH groups at a concentration of 100 wt. ppb or below.
The optical fiber has an OH-originated loss of less than 0.5 dB/km at a wavelength of 1.38 μm.

In this specification, the optical fiber preform may be a glass body from which an optical fiber can be formed by directly drawing the glass body. The optical fiber preform may also be a glass body (an intermediate of an optical fiber preform) to be further processed for the subsequent drawing.

Advantages of the present invention will become apparent from the following detailed description, which illustrates the best mode contemplated to carry out the invention. The invention is defined by the appended claims.

BRIEF DESCRIPTION OF THE DRAWING

The present invention is illustrated to show examples, not to show limitations, in the figures of the accompanying drawing. In the drawing, the same reference numerals refer to similar elements.

In the drawing:

Figures 1A and 1B are schematic diagrams showing the "blowing-away purging," one of the embodiments of the drying step of the present invention, in which Fig. 1A shows the diagram when only a glass pipe is treated and Fig. 1B shows the diagram when a glass rod is inserted in the glass pipe.
Figures 2A to 2D are schematic diagrams showing the "cyclic purging," one of the embodiments of the drying step of the present invention, in which Figs. 2A to 2C show the diagrams when the glass pipe has a through hollow and Fig. 2D shows the diagram when the glass pipe is sealed at some midpoint.
Figure 3 is a schematic diagram showing a glass pipe having connected holding pipes.
Figures 4A to 4C are schematic diagrams showing an embodiment of the connecting step of the present invention.
Figure 5 is a schematic diagram showing an embodiment of the etching step of the present invention.
Figure 6 is a flow chart for Example 1.
Figure 7 is a flow chart for Example 2.
Figure 8 is a schematic diagram showing an embodiment of the chemically purifying step of the present invention.
Figures 9A and 9B are schematic diagrams showing an embodiment of the sealing step of the present invention.

Figures 10A and 10B are schematic diagrams showing an embodiment of the collapsing step of the present invention.

Figure 11 is a graph showing the amount of the water desorbing from a heated silica-glass body.

Figure 12 is a schematic diagram showing an embodiment of a holding pipe.

Figure 13 is a diagram showing the refractive-index profile of the optical fiber produced in Example 1.

Figure 14 is a graph showing the transmission loss-wavelength properties of the optical fibers produced in Example 1 and Comparative example 1.

Figure 15 is a diagram showing the refractive-index profile of the optical fiber produced in Example 2.

Figure 16 is a graph showing the transmission loss-wavelength property of the optical fiber produced in Example 2.

Figure 17 is a schematic diagram showing the collapsing process.

Figure 18 is a graph showing an increment in transmission loss at a 1.4- $\mu$m wavelength band due to OH groups.

DETAILED DESCRIPTION OF THE INVENTION

Here is a silica-glass body having on its surface adsorbed hydrogen atom-containing substances, such as hydrogen atom (H), hydrogen molecules ($H_2$), water ($H_2O$), methanol ($CH_3OH$), methane ($CH_4$), and ketone ($CH_3COCH_3$). When the silica-glass body is heated, the hydrogen atom contained in the hydrogen atom-containing substances reacts with the glass body at its surface as shown by chemical formulae (1) and (2).

$$SiO_2 + H \rightarrow Si\text{-}OH \qquad (1).$$

$$GeO_2 + H \rightarrow Ge\text{-}OH \qquad (2).$$

The hydroxyl group (OH group) thus produced is difficult to remove.

For example, when the hydrogen atom-containing substance is $H_2O$, a heating treatment causes the $H_2O$ to be chemically adsorbed onto the surface of the glass. When the heating treatment is performed at a temperature over 550 °C, the activation energy of the adsorption becomes twice as high as that produced at low temperatures, making it difficult to remove the $H_2O$ from the surface of the glass. When heated at a temperature of 600 °C or above, the $H_2O$ reacts with the glass at its surface to form an OH group. Even when the heating is performed at a temperature as low as 200 °C or above, the $H_2O$ may react with the glass.

According to the present invention, the method of producing an optical fiber preform performs the following treatment before a glass pipe is transformed into a solid body by the collapsing process. The treatment is performed to reduce the hydrogen atom-containing substances adsorbed on the inner surface of the glass pipe or the hydrogen atom-containing substances contained in the atmosphere in the glass pipe or both. In this specification, the treatment that reduces not only $H_2O$ but also other hydrogen atom-containing substances is referred to as "drying" and the step that performs the drying is referred to as a "drying step." The drying treatment eliminates the formation of OH groups even when the glass pipe is heated at high temperatures in the collapsing step. As a result, the drying treatment enables the production of an optical fiber preform that can reduce the increment in the transmission loss due to the OH absorption in the optical fiber. When the drying step of the present invention is performed, the concentration of the OH groups remaining at the optical fiber preform's portion formed by the interface portion at the time of the collapsing can be reduced to 100 wt. ppb or below. Furthermore, the OH-originated loss of the optical fiber can be reduced to less than 0.5 dB/km at a wavelength of 1.38 $\mu$m.

The drying step is performed at a temperature of 550 °C or below. If the heating temperature exceeds 550 °C, it becomes difficult to remove $H_2O$ and other substances adsorbed on the silica glass. If the temperature exceeds 600 °C, the $H_2O$ and other substances react with the glass at its surface to form OH groups.

The types of embodiments for the drying step include the following embodiments:

(A) Hydrogen atom-containing substances in the glass pipe are purged by blowing a gas having a low concentration of hydrogen atom-containing substances (a dried gas) from one end of the glass pipe to the other (hereinafter referred to as "blowing-away purging").

(B) The inside of the glass pipe is evacuated with a vacuum pump (hereinafter referred to as "evacuation").

(C) The inside of the glass pipe is evacuated with a vacuum pump while the blowing-away purging is performed.

(D) First, the gas in the glass pipe is discharged to reduce the pressure inside the pipe. Second, a dried gas is introduced into the pipe to raise the pressure inside the pipe. This cycle is performed at least once (hereinafter referred to as "cyclic purging").

(E) A combination of embodiments (A) to (D), such as (B) + (A), (C) + (A), (B) + (C) + (D), (B) + (D), or (C) + (D).

The drying step can nearly completely remove not only hydrogen atom-containing substances adsorbed both on the inner surface of the glass pipe and on the glass rod inserted in the glass pipe but also hydrogen atom-containing substances contained in the atmosphere in the glass pipe. For example, adsorbed water can be reduced to about $10^{-2}$ wt. ppm or below.

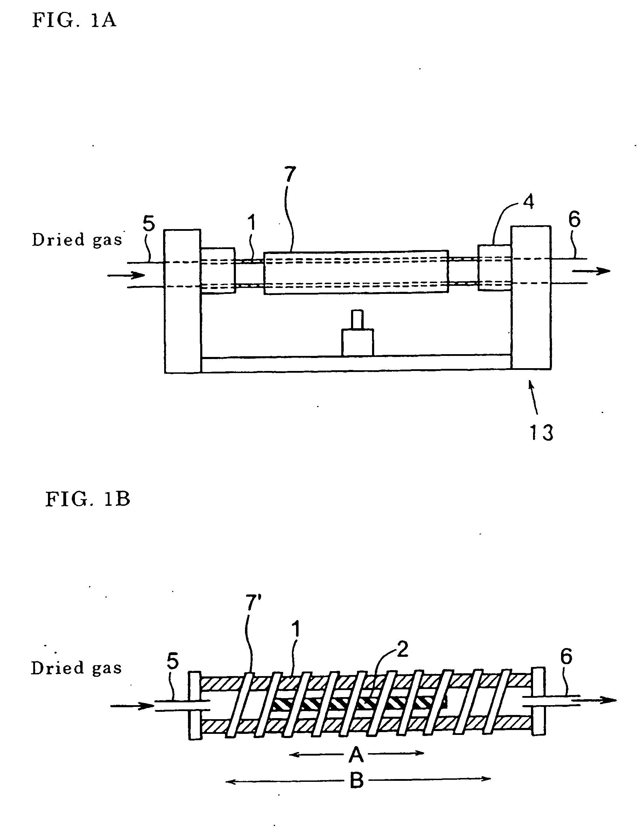

Embodiment (A), expressed as the "blowing-away purging," is explained below. Figures 1A and 1B are schematic diagrams showing the "blowing-away purging," one of the embodiments of the drying step of the present invention. Figure 1A shows the diagram when only a glass pipe is treated. Figure 1B shows the diagram when a glass rod is inserted in the glass pipe.

As shown in Fig. 1A, a glass pipe 1 whose both ends are open is held by holding portions 4. A dried gas is introduced into the glass pipe 1 from a gas line 5 attached to one end of the glass pipe 1 to perform the blowing-away purging through a gas line 6 attached to the other end of the pipe. In the case of Fig. 1B, under the condition that a glass rod 2 is inserted in a glass pipe 1, a dried gas is introduced into the glass pipe 1 from a gas line 5 attached to one end of the pipe 1 to perform the blowing-away purging through a gas line 6 attached to the other end of the pipe.

When the blowing-away purging is performed, the glass pipe may be heated. It is desirable that the heating be performed with a cylindrical mantle heater 7, a tape heater 7' wound on the outer surface of the glass pipe 1, or an electric furnace to facilitate the temperature control. The heating may be performed with another means such as an oxyhydrogen burner or a plasma burner. It is possible to perform the blowing-away purging for a prolonged period without heating.

As explained above, the blowing of a dried gas from one end to the other can not only desorb hydrogen atom-containing substances adsorbed on the inner surface of the glass pipe 1 and on the surface of the glass rod 2 but also reduce the amount of the hydrogen atom-containing substances in the atmosphere in the glass pipe 1. In addition, this process reduces the amount of the re-adsorption of the desorbed hydrogen atom-containing substances onto the surface of the glass.

The types of dried gas for the purging in the drying step include an inert gas, such as nitrogen ($N_2$), helium (He), or argon (Ar), a reactive gas, such as chlorine ($Cl_2$) or thionyl chloride ($SOCl_2$), and an oxygen gas ($O_2$). It is desirable that the dried gas contains hydrogen atom-containing substances at a concentraction of 10 vol. ppm or less in total, more desirably 1 vol. ppm or less.

It is desirable that in the drying step, the volume of the gas blown per minute is at least 10 times the inner volume of the glass pipe in the longitudinal range heated in the drawing step. The sufficient volume of the gas reduces a back diffusion of the hydrogen atom-containing substances from the downstream.

It is desirable that the blowing-away purging be carried out for at least one hour in the drying step. The long-time purging can sufficiently reduce the amount of the adsorbed hydrogen atom-containing substances.

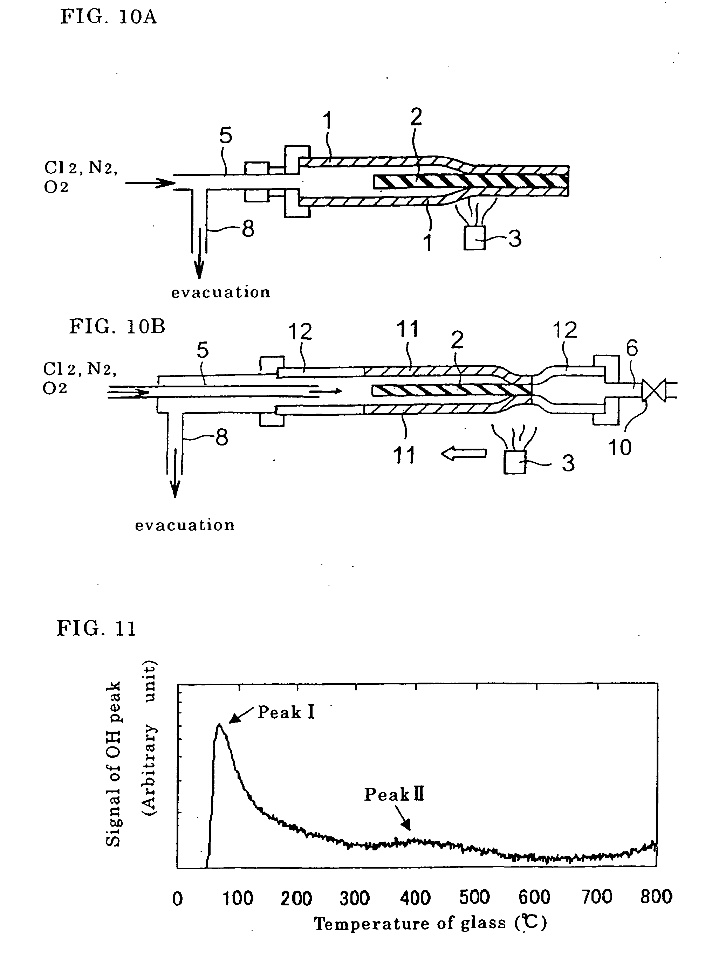

When the glass pipe 1 is heated during the blowing-away purging, the adsorbed molecule can obtain energy to desorb from the surface of the glass, so that the time for the purging can be shortened. Figure 11 is a graph showing the amount of the water desorbing from a heated silica-glass body. As can be seen from Fig. 11, there exist two types of adsorbed $H_2O$: one is the $H_2O$ whose desorption can be promoted at 60 °C or higher (peak I) because it is weakly bonded to the surface of the glass and the other is the $H_2O$ whose desorption can be promoted at 400 °C or higher (peak II) because it is strongly bonded to the surface of the glass. It is desirable to heat the glass pipe at a temperature of 60 °C or higher. It is also desirable to heat the glass pipe at 100 °C or higher because $H_2O$ has a boiling point of 100 °C at atmospheric pressure.

It is desirable to heat the glass pipe at a temperature lower than 200 °C. When the blowing-away purging is performed at a temperature lower than 200 °C, the formation of OH groups can be suppressed. If the temperature is 200 °C or higher, $H_2O$ may react with the glass at its surface.

It is also desirable to heat the glass pipe at a temperature of 60 C or higher and lower than 200 °C to desorb the weakly bonded $H_2O$ from the surface of the glass (the amount of this $H_2O$ is large) and then raise the temperature to 300 °C or higher. Undoubtedly, the blowing-away purging at room temperature can also reduce the amount of the hydrogen atom-containing substances.

In the drying step, it is desirable to heat the glass pipe at a wider longitudinal range than that heated at 550 °C or higher in the sealing step or the collapsing step. In Fig. 1B, range A shows the range corresponding to the effective portion of the optical fiber preform to be formed by the collapsing operation (the effective portion is the portion of the optical fiber preform to be used as the final product). Range A is heated at 550 or higher in the collapsing step. Range B shows the range to be heated in the drying step. As shown in Fig. 1B, range B is wider than range A. This arrangement can prevent OH groups contained in the glass pipe in range B from leaving the glass pipe to form $H_2O$ and then being re-adsorbed onto the inner surface of the glass pipe in range A.

Embodiment (B), expressed as the "evacuation," is explained below. In this embodiment, it is desirable to evacuate with a vacuum pump the inside of the glass pipe to an absolute pressure of 4 kPa or below, more desirably 0.4 kPa or below, preferably 0.04 kPa or below. $H_2O$ has a saturated vapor pressure of 4 kPa at a temperature of 25 °C. Therefore, when the internal pressure of the glass pipe is reduced to a value lower than this value, the desorption of the $H_2O$ can be promoted. Furthermore, the reduction in the internal pressure can increase the mean free path for the $H_2O$ and therefore reduce the possibility of its collision onto the wall of the glass. As a result, the re-adsorption of the

$H_2O$ onto the surface of the glass can be significantly suppressed.

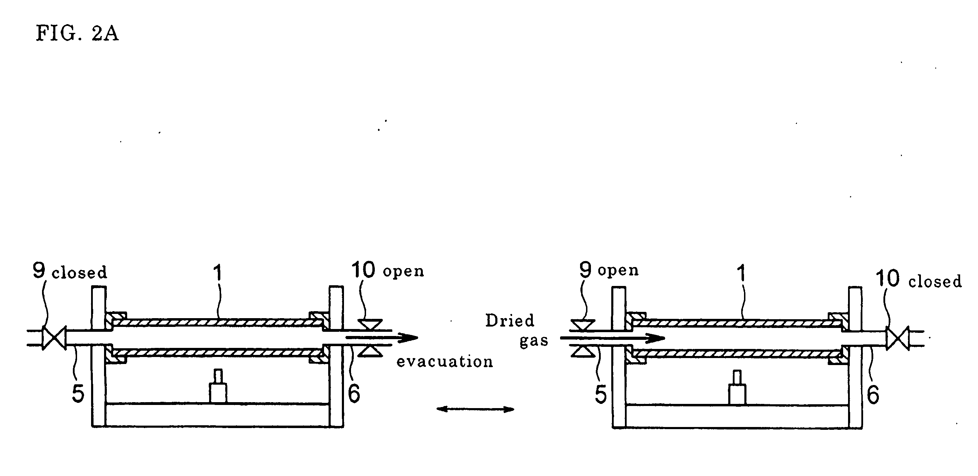

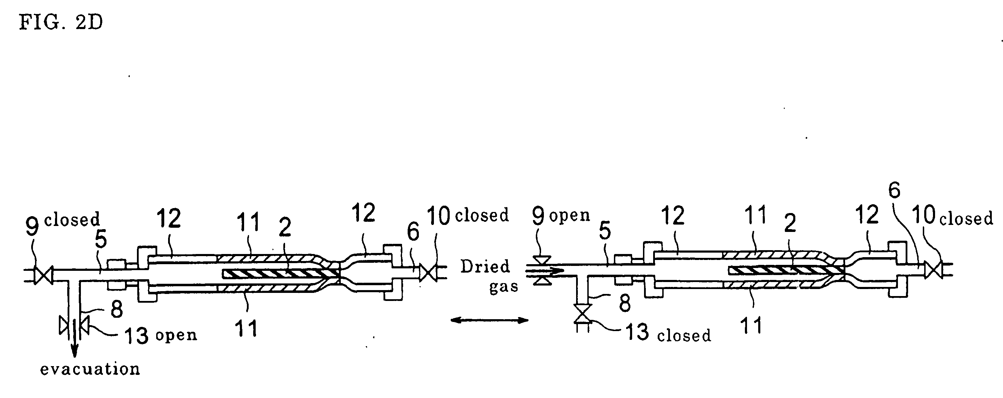

Embodiment (D), expressed as the "cyclic purging," is explained below. Figures 2A to 2D are schematic diagrams showing the "cyclic purging," one of the embodiments of the drying step of the present invention. Figures 2A to 2C show the diagrams when the glass pipe has a through hollow. Figure 2D shows the diagram when the glass pipe is sealed at some midpoint. In this embodiment, it is desirable to reduce the pressure to 4 kPa or below in the pressure-reducing step. It is desirable to raise the pressure to 50 kPa or above in the pressure-raising step, more desirably 100 kPa or above.

When the glass pipe has a through hollow, the cyclic purging is carried out by performing at least once the following procedure from (a) to (c), for example:

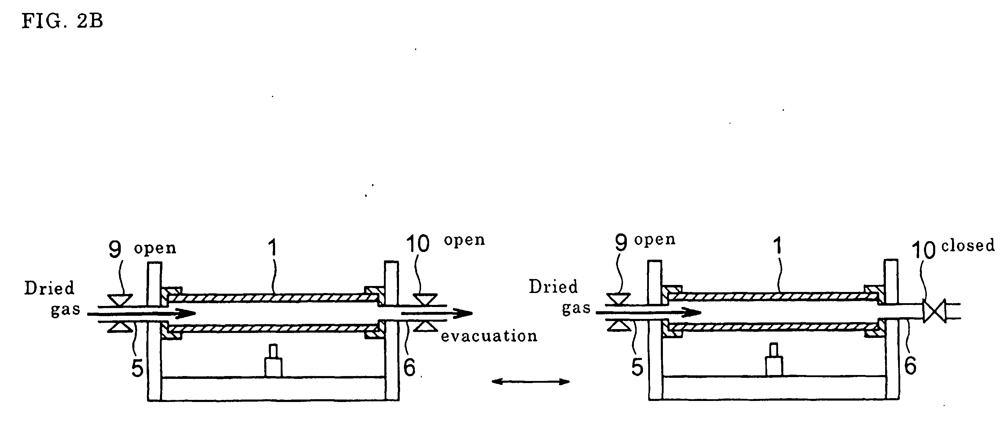

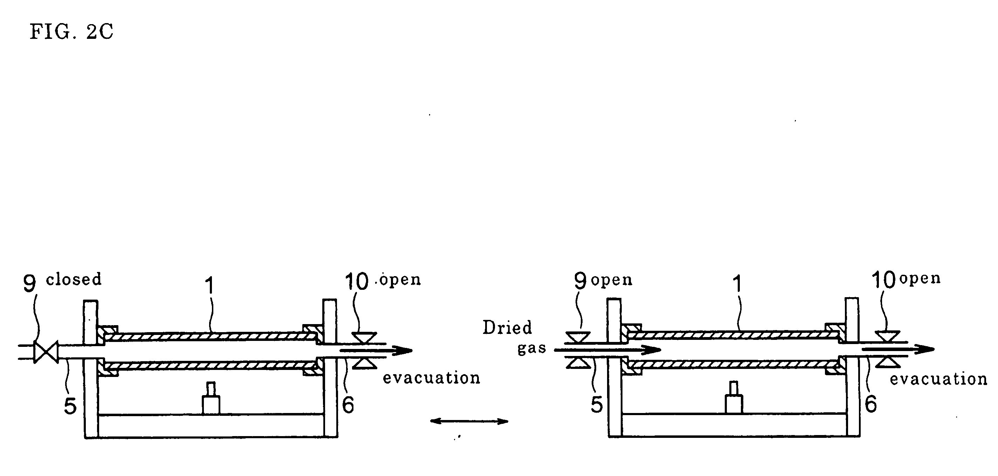

(a) A valve 9 is closed and a valve 10 is opened to evacuate the glass pipe.
←→ The valve 9 is opened and the valve 10 is closed to introduce a dried gas into the glass pipe. (See Fig. 2A.)
(b) The valve 9 is kept open and the valve 10 is opened to evacuate the glass pipe while introducing a dried gas.
←→ The valve 9 is kept open and the valve 10 is closed. (See Fig. 2B.)
(c) The valve 9 is closed and the valve 10 is opened to evacuate the glass pipe.
←→ The valve 9 is opened and the valve 10 is kept open to evacuate the glass pipe while introducing a dried gas. (See Fig. 2C.)

In step (c), when the flow rate of the dried gas is increased and the rate of the evacuation is decreased, the inside of the glass pipe can also be pressurized even while the evacuation is continued.

When the glass pipe is sealed at some midpoint, the cyclic purging is carried out through the following procedure. (See Fig. 2D.) In this case, a gas line 8, which is connected to a vacuum pump, is connected to a gas line 5 attached to the end of the glass pipe for introducing a gas. First, a valve 9 is closed and a valve 13 is opened to evacuate the glass pipe 11 through the gas lines 5 and 8. This evacuation reduces the internal pressure of the glass pipe 11 to an absolute pressure of 4 kPa or below, for example, to evaporate adsorbed water and other substances. Next, the valve 9 is opened to introduce a dried gas into the glass pipe, and at the same time the valve 13 is closed to raise the internal pressure of the glass pipe to an absolute pressure of 50 kPa or above, for example. When the evacuation and the gas introduction are conducted alternately at least once, the amount of the hydrogen atom-containing substances adsorbed on the surfaces of the glass pipe and the glass rod can be significantly reduced.

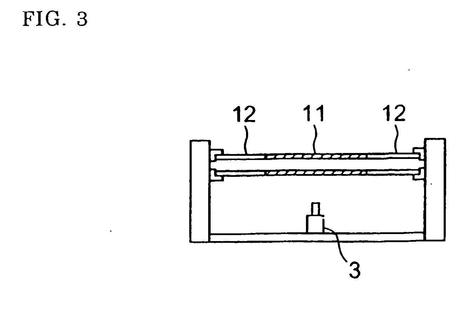

A holding pipe may be connected to one end or both ends of the glass pipe to perform the collapsing operation of the present invention. In other words, before the drying step, another step may be introduced to connect a holding pipe to at least one end of the glass pipe. Figure 3 is a schematic diagram showing the glass pipe having the connected holding pipes. A holding pipe 12 is connected to both ends of a glass pipe 11, which is to be used as the effective portion in the optical fiber preform. This method has an advantage in that the use of the costly glass pipe can be reduced to a required minimum.

When a holding pipe is connected to the glass pipe to perform the collapsing operation of the present invention, it is desirable that the holding pipe have few hydrogen atom-containing substances adsorbed on its inner surface and contain a low concentration of OH groups in its body. More specifically, it is desirable that the holding pipe contain OH groups at a concentration of 10 wt. ppm or less. The reason is that when the holding pipe is heated during the glass-pipe sealing step and the collapsing step, OH groups contained in the holding pipe may leave the holding pipe to form $H_2O$ and then be re-adsorbed onto the inner surface of the glass pipe in the effective portion.

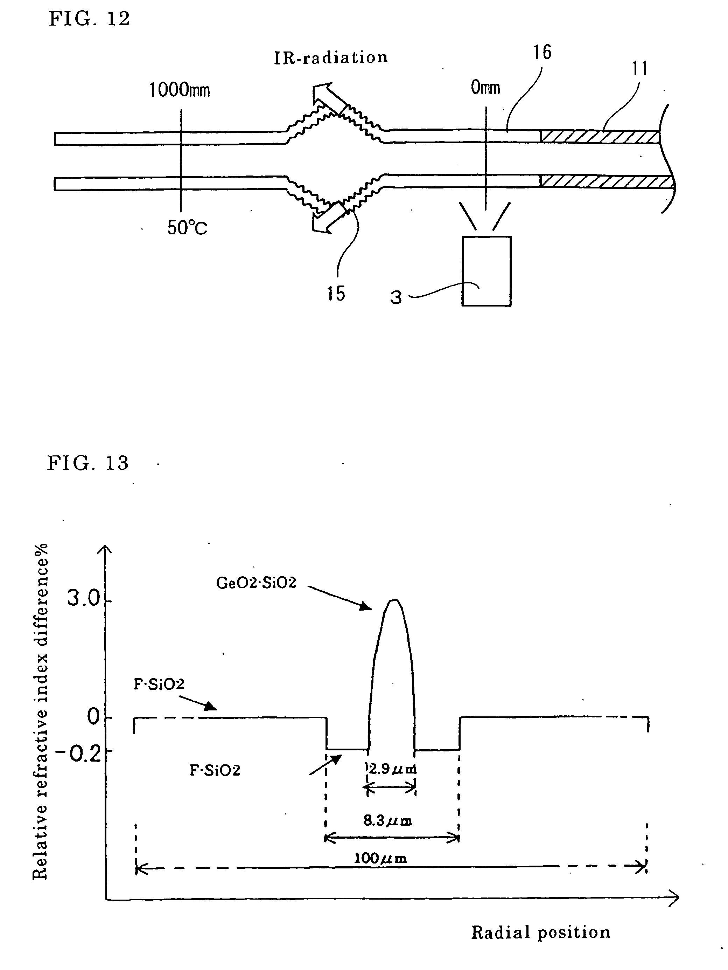

It is desirable that the holding pipe be provided with a portion that radiates to the outside of the pipe the infrared rays travelling through the solid portion forming the wall of the pipe. Figure 12 is a schematic diagram showing an embodiment of the holding pipe of the present invention, in which the holding pipe is connected to the glass pipe 11. A holding pipe 16 is provided with a radiating portion 15 that has the shape of a knot formed by using the pipe. When the holding pipe 16 is heated with a heat source 3, the temperature of the portion of the holding pipe 16 opposite to the heat source 3 with respect to the radiating portion 15 is lower than the temperature when no radiating portion is provided. For example, when one end of a holding pipe was heated at 1,400 °C for 10 minutes, the temperature of the portion of the holding pipe 1,000 mm apart from the heat source 3 was 50 °C when the radiating portion 15 was provided between the portion and the heat source 3 and 100 °C when no radiating portion was provided.

When the holding pipe 16 is used, the portion between the radiating portion 15 and the glass pipe 11 is subjected to the drying step of the present invention to remove hydrogen atom-containing substances. The portion of the holding pipe 16 opposite to the glass pipe 11 with respect to the radiating portion 15 is not heated to high temperatures. Consequently, hydrogen atom-containing substances adsorbed in this portion do not diffuse toward the effective portion of the glass pipe 11 during the production process.

The radiating portion 15 may have a shape other than the shape of a knot formed by using the pipe. For example, an opaque silica-glass pipe capable of scattering infrared rays may be inserted into the holding pipe 16 to form the radiating portion 15. Alternatively, when two pipes are connected to form the holding pipe 16, the fusion-connected portion may be used as the radiating portion 15.

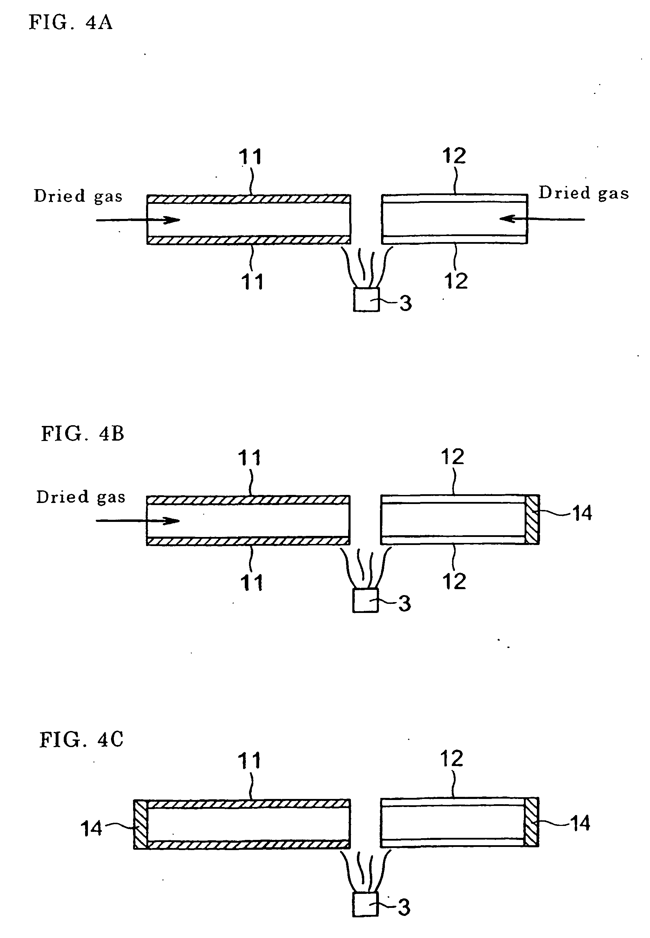

Figures 4A to 4C are schematic diagrams showing an embodiment of the connecting step of the present invention. The connection between the glass pipe 11 and the holding pipe 12 is performed by heating the two members with a heat source 3 so that they can be fusion-connected. When a plasma burner, an induction furnace, a resistance furnace, or another heat source that does not produce $H_2O$ is used, the intrusion of $H_2O$ can be reduced significantly at the time of the connection between the glass pipe and the holding pipe. On the other hand, when an oxyhydrogen burner or another heat source that produces $H_2O$ is used, hydrogen atom-containing substances may intrude into the glass pipe and the holding pipe at the time of the connection between the two members.

To prevent the above-described intrusion, as shown in Fig. 4A, for example, a dried gas is introduced into both pipes from the end opposite to the end to be connected. Alternatively, as shown in Fig. 4B, one of the two pipes is provided with a sealing material 14 attached to its end opposite to the end to be connected. Under this condition, a dried gas is introduced into the other pipe from its end opposite to the end to be connected. Yet another alternative is shown in Fig. 4C. In this case, each pipe is provided with a sealing material 14 attached to its end opposite to the end to be connected. When the connection work is conducted under this condition, the amount of the outside air entering the glass pipe can be reduced. As a result, contamination of the inner surfaces of the two pipes can be reduced. The dried gas can be the same type of the dried gas as used in the drying step. It is desirable that the dried gas contains hydrogen atom-containing substances at a concentration of 10 vol. ppm or less in total, more desirably 1 vol. ppm or less. It is also desirable to perform the drying step after the connecting step. This is another desirable embodiment.

It is desirable that the collapsing operation of the present invention include a step in which the inner surface of the glass pipe is gas phase-etched before or after the drying step (this step is called an "etching step") (the term "glass pipe" is used as a generic term that includes a glass pipe having a holding pipe connected to at least one end of it). The gas-phase etching has the following effects:

(a) It can smooth the inner surface of the glass pipe.
(b) It can shave off chemically adsorbed hydrogen atom-containing substances that still remain after the drying step.
(c) It can remove impurities having intruded into the pipe to a certain extent (from several microns to several millimeters from the inner surface).

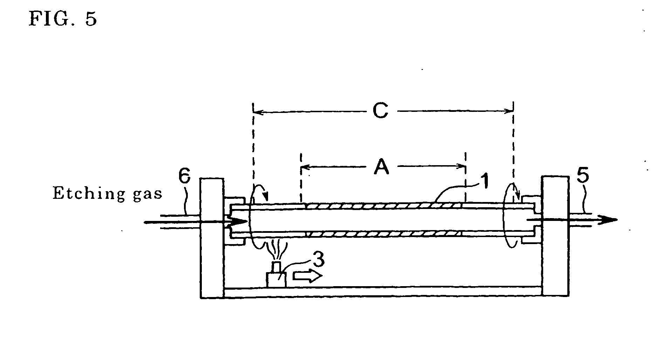

Figure 5 is a schematic diagram showing an embodiment of the etching step of the present invention.

The glass pipe 1 is heated with a heat source 3 while an etching gas is introduced into the pipe from one end of it. Range A shows the range corresponding to the effective portion of the optical fiber preform. Range A is heated at 550 °C or higher in the following step, for example, the collapsing step. Range C shows the range to be gas phase-etched. It is desirable that range C include range A. The reason is that if the chemically adsorbed $H_2O$ still remains on the inner surface of the glass pipe in range A, this arrangement can prevent the $H_2O$ from evaporating to contaminate the inside of the glass pipe when the glass pipe is heated at 550 °C or higher at the collapsing step.

The types of gas for the gas-phase etching include sulfur hexafluoride ($SF_6$), fluorocarbon ($C_2F_6$), and silicon tetrafluoride ($SiF_4$). The gas concentration, the etching time, and the heating temperature can be determined according to the intended degree of etching. The etching gas may be mixed with $Cl_2$.

Before the etching step, a preliminary drying step may be provided to dry the inside of the glass pipe. This step can prevent the formation of a highly acidic liquid due to the reaction between the etching gas and $H_2O$. In particular, when $SF_6$ is used for the etching, if $H_2O$ remains in the pipe, concentrated sulfuric acid is formed. It is difficult to remove the concentrated sulfuric acid. As a result, impurities such as OH groups intrude into the produced optical fiber. Furthermore, the formation of the concentrated sulfuric acid is extremely hazardous to the workers.

In the present invention, before the drying step, desirably between the etching step and the drying step, a step may be performed to deposit a glass layer on the inner surface of the glass pipe by using a method such as the modified chemical vapor deposition method (MCVD method) or the plasma-activated chemical vapor deposition method (PCVD method) (this step is called a "glass-depositing step"). For example, the following gases are introduced into the glass pipe 1 from its one end: (a) a material gas for the glass composed of silicon tetrachloride ($SiCl_4$), (b) a material dopant gas for controlling the refractive index composed of a gas such as germanium tetrachloride ($GeCl_4$), phosphorus oxychloride, $SiF_4$, or boron trichloride, (c) an $O_2$ gas, and (d) an He gas. A heat source is provided at the outside of the glass pipe so as to be able to move relatively to the glass pipe. The heating of the glass pipe with the heat source forms a glass layer on the inner surface of the glass pipe. The types of the heat source include an oxyhydrogen burner, a plasma flame, and an electric furnace such as an induction furnace or a resistance furnace.

The inside of the etched glass pipe is almost free of hydrogen atom-containing substances. In addition, hydrogen atom-containing substances are not adsorbed on the inner surface of the glass pipe. Therefore, the etched glass pipe is eminently suitable as the starting glass pipe for the MCVD or PCVD method. The etched glass pipe can eliminate the need for synthesizing the so-called optical cladding layer. The etched glass pipe is advantageous in that even when a core layer is deposited directly onto the inner surface of the glass pipe, a high-quality optical fiber can be obtained.

As with the foregoing glass-depositing step, before the drying step, desirably between the etching step and the drying step, a step may be performed to insert a glass rod into the glass pipe (this step is called an "assembling step"). More specifically, the above-described steps may be performed in the following order: the etching step, the glass-depositing step, the assembling step, the drying step, the sealing step, and the collapsing step.

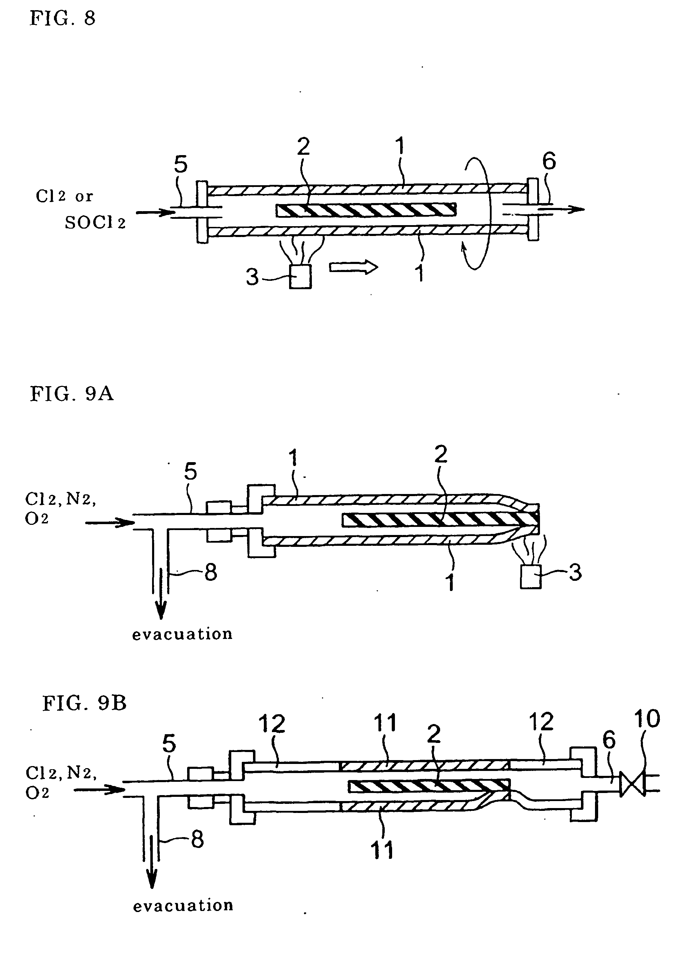

When metallic impurities and other undesirable substances cannot be removed by the drying step only, after the drying step, a step may be performed to chemically purify the pipe by heating it while a gas containing chlorine-element-containing substances is blown through the inside of the pipe (this step is called a "chemically purifying step"). Figure 8 is a schematic diagram showing an embodiment of the chemically purifying step of the present invention. A glass pipe 1 is heated with a heat source 3 at about 1,000 °C while introducing the following gas into it from a gas line 5. The gas is a reactive gas such as $Cl_2$, $SOCl_2$, $SiCl_4$, $GeCl_4$, or carbon tetrachloride ($CCl_4$). This process can transform a metal and a metal oxide having a low vapor pressure into a metal chloride having a high vapor pressure so that they can be removed (for example, nickel chloride has a vapor pressure of 1 atm at 993 °C and iron chloride has a vapor pressure of 1 atm at about 1,020 °C).

After the chemically purifying step, a step may be performed to dry the inside of the glass pipe (this step is called an "additional drying step"). The reason is that $Cl_2$ used in the chemically purifying step usually contains 1 ppm or so $H_2O$ and it is desirable to remove the $H_2O$.

After the drying step or after the drying step and the chemically purifying step, a step is provided to seal the glass pipe or the holding pipe at the side for the gas-discharging end (this step is called a "sealing step"). Figures 9A and 9C are schematic diagrams showing an embodiment of the sealing step of the present invention. As shown in Fig. 9A, the glass pipe 1 is heated with a heat source 3 placed at the outside of the pipe to seal the glass pipe 1 by fusion at the end portion. Instead of the fusion bonding at the end portion of the glass pipe, as shown in Fig. 9B, a valve 10 in a gas line 6 attached to one end of the glass pipe may be closed to seal the glass pipe so that the gas cannot be discharged. After the sealing step and immediately before the collapsing step, at least one cycle of the cyclic purging may be performed. This operation is highly effective to reduce the amount of the hydrogen atom-containing substances. As explained earlier, the cyclic purging is performed through the following procedure: First, the gas in the glass pipe is discharged to reduce the pressure inside the pipe. Second, a dried gas is introduced into the pipe to raise the pressure inside the pipe.

Figures 10A and 10B are schematic diagrams showing an embodiment of the collapsing step of the present invention. After the sealing step or the foregoing purging cycle, as shown in Fig. 10A, the glass pipe 1 is heated with the moving heat source 3 to collapse it to perform the collapsing step. In this case, a gas, such as $Cl_2$, $O_2$, a mixed gas of $Cl_2$ and $O_2$, or a mixed gas of $Cl_2$, $O_2$, and He, may be introduced into the glass pipe 1. It is desirable that the gas contains hydrogen atom-containing substances at a concentration of 10 vol. ppm or less in total. While the gas introduction is maintained, the inside of the glass pipe may be evacuated to reduce the pressure to the range of 100 to 0.1 kPa. This evacuation enables good collapsing without forming gas bubbles at the interface of the collapsing. Alternatively, the inside of the glass pipe may be evacuated without introducing the gas. Yet alternatively, while the gas introduction is maintained, the internal pressure of the glass pipe may be adjusted to become slightly higher than atmospheric pressure. More specifically, it is desirable that the pressure difference between the internal pressure and atmospheric pressure be +0.01 to +4 kPa, more desirably +0.01 to +1 kPa.

In the embodiment shown in Fig. 10A, the glass pipe 1 and the glass rod 2 are fusion-unified by collapsing. In this case, when the collapsing operation is performed, the inside of the glass pipe 1 is evacuated while a gas, such as $Cl_2$, $N_2$, or $O_2$, is introduced into the pipe. This procedure can reduce the concentration of the air intruding into the glass pipe. As shown in Fig. 10B, it is more desirable to provide a gas-introducing port and a gas-discharging port independently at the end of the glass pipe 11.

One of the desirable embodiments of the present invention comprises the following steps in this order: the connecting step, the preliminary drying step, the etching step, the glass-depositing step or the assembling step or both, the drying step, the chemically purifying step, the sealing step, the cyclic-purging operation, and the collapsing step. Thus, a glass rod can be produced.

The glass rod and the glass pipe to be used in the present invention may be produced with the vapor-phase axial deposition method (VAD method), the modified chemical vapor deposition method (MCVD method), the outside vapor deposition method (OVD method), or another well-known method. It is also desirable that the glass rod produced by performing the collapsing operation of the present invention be used as the starting glass rod. Alternatively, the glass rod produced by the present invention may be transformed into a pipe through a hollow-forming processing such as boring. The glass pipe thus produced can be used as the starting glass pipe to be collapsed again by reperforming the present invention. This is another form of the desirable embodiments.

When a solid glass body produced with the VAD method is processed into a glass pipe, it is desirable to draw the glass body before it is bored, rather than boring it before it is drawn. If the glass body is first bored to form a glass pipe, when the glass pipe is heated at the time of the drawing, the water adsorbed on the inner surface of the glass pipe diffuses into the wall of the glass pipe. The diffused water is difficult to remove. When the glass body is drawn before it is bored, it is desirable to etch the inner surface of the glass pipe in a subsequent step such that the inner-surface portion of the glass pipe is rather deeply (for example, one or two mm) removed.

Example 1

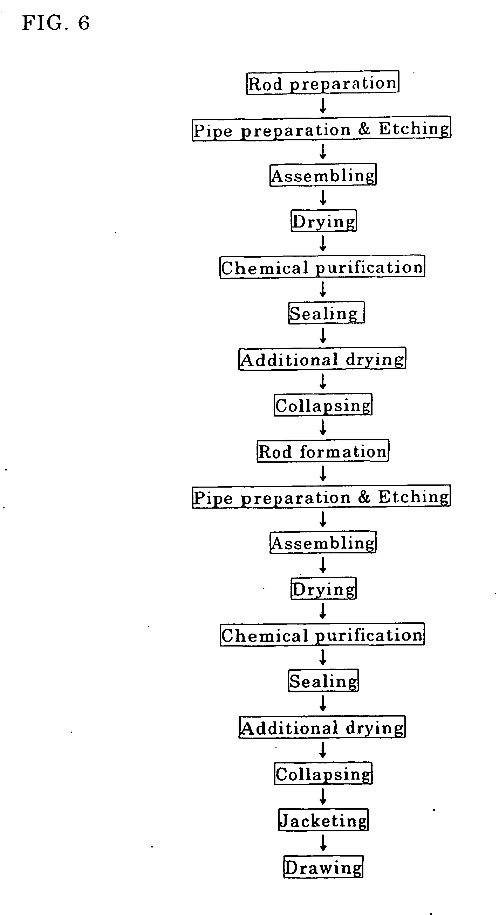

Figure 6 shows a flow chart for Example 1.

1) A silica-glass body was produced with the VAD method. The body was doped with 27 mol % germanium oxide ($GeO_2$) in the vicinity of the center. The body was processed into a glass rod having a diameter of 7.5 mm and a length of 600 mm. The glass rod was to be used to form the core region.
2) A silica-glass body doped with 1.5 wt. % fluorine was produced with the VAD method. The body was processed into a glass pipe having an outer diameter of 40 mm, an inner diameter of 8.5 mm, and a length of about 500 mm. The glass pipe was to be used to form the depressed region. The concentration of the OH groups in the glass pipe was below the detection limit (0.01 wt. ppm) of the infrared spectroscope. The glass pipe was gas phase-etched by heating it at about 1,500 °C while an etching gas composed of $SF_6$ was blown through the pipe.
3) The glass rod prepared in 1) was inserted into the glass pipe prepared in 2).
4) As shown in Fig. 1B, the glass pipe was evacuated with a vacuum pump through the gas line 6 while a dried $N_2$ gas was blown into it at a rate of 2,000 "sccm" from the gas line 5. The term "sccm" is the abbreviation of "standard cubic centimeter per minute." The dried $N_2$ gas contained $H_2O$ at a concentration of less than 0.5 vol. ppm and other hydrogen atom-containing substances at a concentration of less than 0.1 vol. ppm. This operation maintained the internal pressure of the glass pipe 1 at 2.5 kPa. During this operation, the glass pipe 1 and the glass rod 2 were heated with the tape heater 7' at 200 °C. The heated range included not only the range to be heated at 550 °C or higher in the chemically purifying step, sealing step, and collapsing step to be performed afterward but also an additional length of 200 mm from each end of the foregoing heating range. The volume of the $N_2$ gas blown per minute was about 40 times the inner volume of the glass pipe 1 in the heating range (about 50 cm³). This operation was maintained for four hours as the drying step. (This step is referred to as the first drying step to distinguish it from the second drying step described in 12) below.)
5) As shown in Fig. 8, a $Cl_2$ gas was introduced into the glass pipe 1 at a flow rate of 500 sccm. Under this condition, the glass pipe 1 was heated with the heat source 3 up to 1,150 °C to remove metallic impurities.
6) As shown in Fig. 9A, a portion in the vicinity of the gas-discharging end of the glass pipe 1 in the drying step was heated with the heat source 3 to seal it by fusion.
7) The inside of the glass pipe 1 was evacuated with a vacuum pump through the gas line 8 to attain a vacuum with a pressure of less than 0.01 kPa. Under this condition, a dried $N_2$ gas was introduced into the glass pipe 1. Then, the operation of the vacuum pump was stopped to raise the pressure to 105 kPa. This cycle was repeated three times to desorb the adsorbed gas (mainly $H_2O$) from the surface of the glass rod 2 and the inner surface of the glass pipe 1.
8) As shown in Fig. 10A, the glass pipe 1 and the glass rod 2 were unified by collapsing the glass pipe 1 to obtain a glass body having a diameter of about 39 mm and a length of 400 mm. During this collapsing operation, a $Cl_2$ gas was introduced into the glass pipe 1 at a rate of 500 sccm and an $O_2$ gas, at a rate of 500 sccm. The internal pressure of the glass pipe 1 was -1 kPa against atmospheric pressure. During this collapsing operation, the temperature of the outer surface of the glass pipe 1 was 1,600 °C when measured with a radiation thermometer.
9) The glass body was drawn to a diameter of 11.7 mm. Then, its circumference was mechanically ground to obtain a glass rod having a diameter of 6.4 mm and a length of 600 mm.
10) A silica-glass body doped with about 0.9 wt. % fluorine was produced with the VAD method. The body was processed into a glass pipe having an outer diameter of 43 mm, an inner diameter of 9 mm, and a length of about 500 mm. The glass pipe was to be used to form the cladding region. Before the collapsing operation, the glass pipe was gas phase-etched by heating it at about 1,500 °C while an $SF_6$ gas was blown through the pipe.
11) The glass rod prepared in 9) was inserted into the glass pipe prepared in 10).
12) A dried $N_2$ gas was blown into the glass pipe at a rate of 2,000 sccm from its one end. Under this condition, the gas inside the glass pipe was discharged from the other end such that the pressure inside the glass pipe could maintain slightly higher than the outside pressure. This operation maintained the internal pressure of the glass pipe at 103 kPa. During this operation, the glass pipe was heated with a tape heater at 170 °C. The heated range included not only the range to be heated at 550 °C or higher in the chemically purifying step, sealing step, and collapsing step to be performed afterward but also an additional length of 200 mm from each end of the foregoing heating range. The volume of the $N_2$ gas blown per minute was about 35 times the inner volume of the glass pipe in the heating range (about 60 cm$^3$). This blowing-away purging was maintained for one hour as the drying step. (This step is referred to as the second drying step.)
13) A $Cl_2$ gas was introduced into the glass pipe at a flow rate of 1,000 sccm. Under this condition, the glass pipe was heated up to 1,120 °C to remove metallic impurities.
14) A portion in the vicinity of the gas-discharging end of the glass pipe was sealed.
15) A cyclic purging was performed under the same conditions as in 7).
16) As shown in Fig. 10A, the glass pipe and the glass rod treated in 15) were unified by collapsing the glass pipe to obtain a glass body having a diameter of 42 mm and a length of 400 mm. During this collapsing operation, a $Cl_2$ gas was introduced into the glass pipe 1 at a rate of 100 sccm and an $O_2$ gas, at a rate of 900 sccm. The internal pressure of the glass pipe 1 was -4 kPa against atmospheric pressure. During this collapsing operation, the temperature of the outer surface of the glass pipe 1 was 1,500 °C.
17) Silica glass doped with about 0.9 wt. % fluorine was synthesized over the circumference of the glass body by using the OVD method. This operation increased the ratio "D/2a" to 43.1, where "D" is the outer diameter of the cladding region and "2a" is the diameter of the core region. Thus, an optical fiber preform was produced. A part of the optical fiber preform was sliced to measure the concentration of the OH groups remaining at the portion formed by the interface portion at the time of the collapsing performed in 8). The measurement was conducted with the infrared absorption method, and the result was 15 ppb.
18) The optical fiber preform was drawn to obtain an optical fiber having a glass-portion diameter of 100 μm. Figure 13 shows the refractive-index profile of the produced optical fiber.

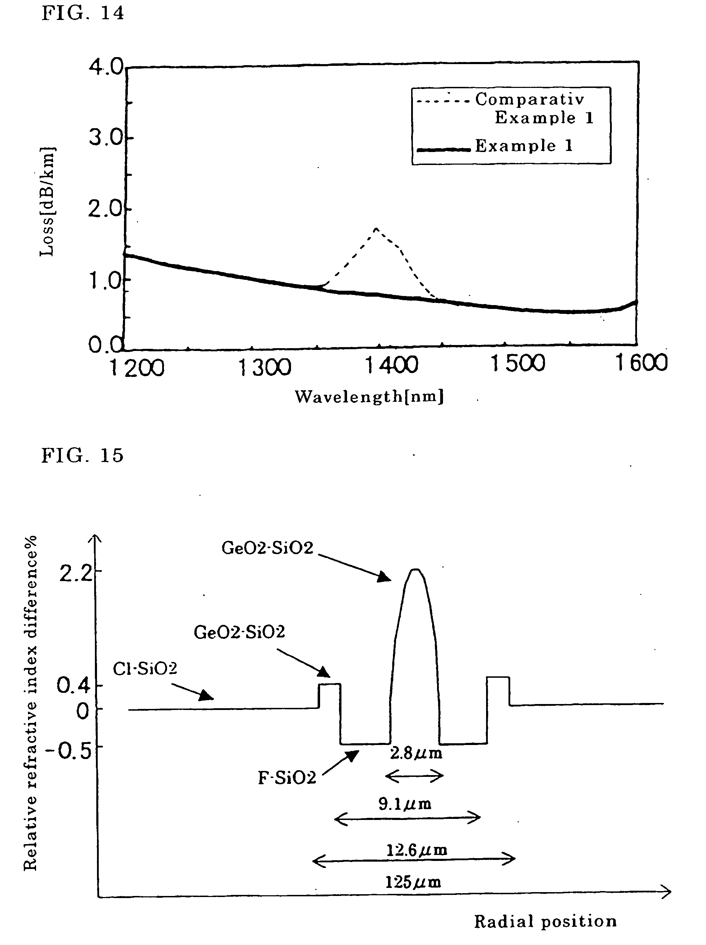

The optical fiber had the following transmission characteristics at a wavelength of 1,550 nm: a transmission loss of 0.50 dB/km, a chromatic dispersion of -41 ps/km/nm, a dispersion slope of -0.01 ps/km/nm$^2$, an $A_{eff}$ of 8.5 μm$^2$, a cutoff wavelength of 1,050 nm, and a PMD of 0.1 ps/km$^{1/2}$. These characteristics proved that the optical fiber was highly non-linear. The optical fiber had good properties as an optical fiber for Raman amplification. The transmission loss-wavelength property of the optical fiber is shown by a solid line in Fig. 14. As can be seen from Fig. 14, the excessive transmission loss due to the OH group in the 1.4-μm band (OH-originated loss) is suppressed to less than 0.1 dB/km at a wavelength of 1.38 μm.

Comparative example 1

An optical fiber was produced with the same method as in Example 1 except that the first drying step (step 4)) and the chemically purifying step (step 5)) using $Cl_2$ were omitted. The transmission loss-wavelength property of the optical fiber is shown by a broken line in Fig. 14. As can be seen from Fig. 14, the OH-originated loss was 1.3 dB/km.

Example 2

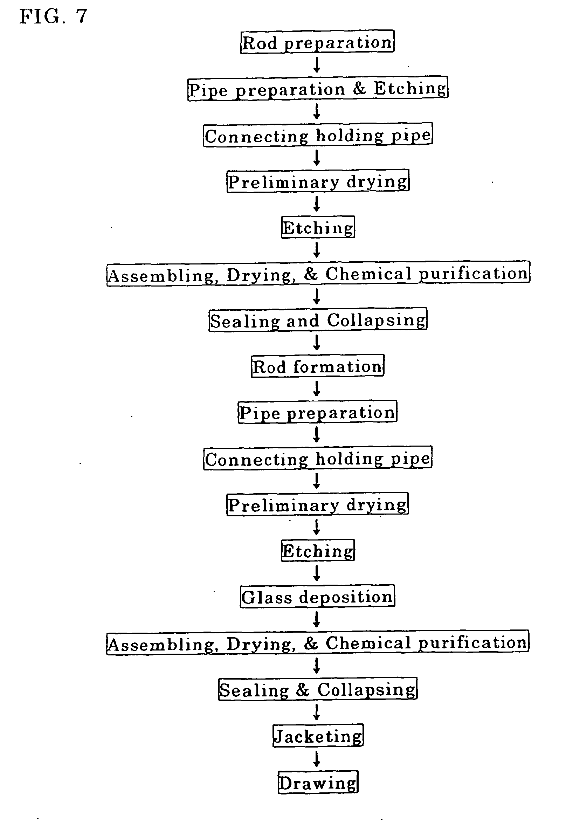

Figure 7 shows a flow chart for Example 2.

1) A silica-glass body was produced with the VAD method. The body was doped with 22 mol % $GeO_2$ in the vicinity of the center. The body was processed into a glass rod having a diameter of 8.5 mm and a length of 600 mm. The glass rod was to be used to form the core region.
2) A glass pipe doped with 1.5 wt. % fluorine was prepared with the same method as in Example 1. The glass pipe had an outer diameter of 40 mm, an inner diameter of 8.5 mm, and a length of about 500 mm. The glass pipe was to be used to form the depressed region.
3) A holding pipe was connected to each end of the glass pipe with an oxyhydrogen-flame burner used as the heat source. The connection work was performed on a horizontal glass-processing lathe. The holding pipe had an outer diameter of 40 mm, an inner diameter of 10 mm, and a length of about 400 mm. The concentration of the OH groups contained in the holding pipe was 8 wt. ppm when measured with an infrared spectroscope. As shown in Fig. 4A, when the glass pipe and the holding pipe were connected, a dried $N_2$ gas was blown into each pipe from the end opposite to the end to be connected.
4) The inside of the glass pipe was evacuated with an oil rotary vacuum pump to reduce the absolute pressure to 40 Pa. Subsequently, a dried $N_2$ gas was blown through the pipe. During this blowing-away operation, the absolute pressure in the glass pipe was about 102 kPa. The cycle of the pressure reduction and the blowing away was repeated three times to discharge hydrogen atom-containing substances in the atmosphere in the pipe and hydrogen atom-containing substances adsorbed on the inner surface of the pipe. This was the preliminary drying step.
5) A gas-phase etching operation was performed by heating the glass pipe with a plasma burner while

an $SF_6$ gas was blown into the pipe at a rate of 100 sccm, a $Cl_2$ gas at a rate of 200 sccm, and an He gas at a rate of 100 sccm. During this operation, the pipe was moved to reciprocate a plurality of times until the inner diameter of the pipe in the effective portion became 11 mm.

6) The glass rod prepared in 1) was inserted into the pipe prepared in 5). The inside of the pipe was evacuated with a vacuum pump to attain a vacuum with a pressure of less than 0.1 kPa. Under this condition, a dried $N_2$ gas was introduced into the glass pipe. Then, the operation of the vacuum pump was stopped to raise the pressure to 103 kPa. This cycle was repeated three times to desorb the adsorbed gas from the surface of the glass rod and the inner surface of the glass pipe. During this operation, the glass pipe was heated with a mantle heater at 450 °C. The heated range included not only the range to be heated at 550 °C or higher in steps to be performed afterward but also an additional length of 300 mm from each end of the foregoing heating range. Then, a $Cl_2$ gas was introduced into the pipe at a flow rate of 500 sccm. Under this condition, the glass pipe was heated up to 1,200 °C to remove metallic impurities.

7) The clearance between the glass pipe and the glass rod was sealed by using a plasma flame as the heat source. Then, the glass pipe and the glass rod were unified by collapsing the glass pipe to obtain a glass body having a diameter of 39 mm and a length of about 400 mm. During this collapsing operation, the glass pipe was evacuated with a vacuum pump capable of reducing the pressure to 0.03 kPa while a dried $O_2$ gas was introduced into the pipe at a rate of 400 sccm. The dried $O_2$ gas contained $H_2O$ at a concentration of less than 0.5 vol. ppm and other hydrogen atom-containing substances at a concentration of less than 0.1 vol. ppm. During this operation, the internal pressure of the pipe was about 0.1 kPa and the temperature of the outer surface of the glass pipe was 1,200 °C. A measurement revealed that the amount of air intrusion into the glass pipe was about 0.01 sccm.

8) The glass body was drawn to a diameter of 13.7 mm. Then, its circumference was processed by mechanical grinding and etching with a hydrogen fluoride solution to obtain a glass rod having a diameter of 9.6 mm and a length of 600 mm.

9) A silica-glass body doped with 3 wt. % chlorine (Cl) was produced with the VAD method. The body was drawn to attain a uniform diameter and provided with a hollow at its center. Thus, the body was processed into a glass pipe having an outer diameter of 45 mm and a length of about 650 mm. The glass pipe was to be used to form the cladding region. The concentration of the OH groups in the pipe was below the detection limit.

10) A holding pipe was connected to each end of the glass pipe produced in 9) by using the same equipment as used in 3). The holding pipe had an outer diameter of 42 mm, an inner diameter of 15 mm, and a length of 400 mm. The concentration of the OH groups in the holding pipe was about 8 wt. ppm when measured with an infrared spectroscope. When the glass pipe and the holding pipe were connected, a dried $N_2$ gas was blown into each pipe from the end opposite to the end to be connected.

11) The same preliminary drying step as in 4) was performed on the glass pipe produced in 10).

12) A gas-phase etching operation was performed by heating the glass pipe with a plasma burner while an $SF_6$ gas was blown away at a rate of 150 sccm, a $Cl_2$ gas at a rate of 200 sccm, and an He gas at a rate of 100 sccm. During this operation, the burner was moved to reciprocate a plurality of times until the inner diameter of the pipe in the effective portion became 14.5 mm.

13) A silica-glass layer doped with 4 mol % $GeO_2$ on the average was synthesized on the inner surface of the glass pipe by using the MCVD method, which heated the glass pipe with a plasma flame. The silica-glass layer having a thickness of 1.7 mm was to be used to form the ring portion. After this operation, the inner diameter of the glass pipe became 11.2 mm.

14) The glass rod prepared in 8) was inserted into the glass pipe. The glass pipe was heated at about 200 °C with a mantle heater while a dried $N_2$ gas was blown through the pipe at a rate of 5,000 sccm. The heated range included not only the range to be heated at 550 °C or higher in steps to be performed afterward but also an additional length of 250 mm from each end of the foregoing heating range. The volume of the $N_2$ gas blown per minute was about 44 times the inner volume of the glass pipe in the heating range (about 113 $cm^3$). This operation was maintained for five hours to desorb the adsorbed gas from the surface of the glass rod and the inner surface of the pipe. Then, a $Cl_2$ gas was introduced into the pipe at a flow rate of 1,000 sccm. Under this condition, the pipe was heated up to 1,200 °C to remove metallic impurities by causing them to react with the $Cl_2$.

15) The glass pipe and the glass rod treated in 14) were sealed and unified by collapsing the glass pipe with a method similar to that in 7). Thus, a glass body having a diameter of 43 mm and a length of 500 mm was obtained.

16) Silica glass doped with 3 wt. % Cl was synthesized over the circumference of the glass body by using the VAD method. This operation increased the ratio "D/2a" to 44.64, where "D" is the outer diameter of the cladding region and "2a" is the diameter of the core region. Thus, an optical fiber preform was produced.

17) The optical fiber preform was drawn to obtain an optical fiber having a glass-portion diameter of 125 μm. Figure 15 shows the refractive-index profile of the produced optical fiber.

The optical fiber had the following transmission characteristics at a wavelength of 1,550 nm: a transmission loss of 0.49 dB/km, a chromatic dispersion of -159.5 ps/km/nm, a dispersion slope of -0.65 ps/km/nm$^2$, an $A_{eff}$ of 17 μm$^2$, a cutoff wavelength of 1,380 nm, and a PMD of about 0.05 ps/km$^{1/2}$.

The transmission loss-wavelength property of the optical fiber is shown in Fig. 16. As can be seen from Fig. 16, the excessive transmission loss due to the OH group in the 1.4-μm band is suppressed to less than 0.05 dB/km at a wavelength of 1.38 μm. The optical fiber is a broad-band dispersion-compensating fiber that can compensate the chromatic dispersion of an optical fiber, having a 1.3- μm-band zero-dispersion wavelength, from 1.45 to 1.62 μ m. Because the optical fiber is free from the excessive transmission loss due to the OH group, it has a low transmission loss in the vicinity of 1.45 μm , proving that it has a good transmission property. Furthermore, the optical fiber is suitable for performing Raman amplification.

As a test for proving the property of the optical fiber, the fiber was placed in an $H_2$ atmosphere at a concentration of 100% at a temperature of 80 C for 24 hours. Then, the transmission loss was measured at 1.38 μm. The measured result showed that the increment in the loss was as small as below the measuring limit of 0.05 dB/km.

Example 3

1) A silica-glass body doped with 0.4 wt. % chlorine was produced with the VAD method. The body was processed into a glass rod having a diameter of 4 mm and a length of 600 mm. The glass rod was to be used to form the core region and had a relative refractive-index difference of 0.06% to silica glass.

2) A silica-glass body doped with 1.0 wt. % fluorine was produced with the VAD method. The body was processed into a glass pipe having an outer diameter of 25 mm, an inner diameter of 4 mm, and a length of about 500 mm. The glass pipe was to be used to form the cladding region and had a relative refractive-index difference of -0.33% to silica glass. The inner surface of the glass pipe was gas phase-etched by heating it at about 1,500 °C while an $SF_6$ gas was blown through the pipe.

3) The glass rod prepared in 1) was inserted into the glass pipe prepared in 2).

4) The glass pipe was evacuated with a vacuum pump from its one end while a dried $N_2$ gas was blown into it at a rate of 2,000 sccm from the other end. This operation maintained the internal pressure of the glass pipe at 2.5 kPa. During this operation, the glass pipe and the glass rod were heated with a tape heater at 200 °C. The heated range included not only the range to be heated at 550 °C or higher in the chemically purifying step, sealing step, and collapsing step to be performed afterward but also an additional length of 200 mm from each end of the foregoing heating range. This operation was maintained for four hours as the drying step.

5) A $Cl_2$ gas was introduced into the glass pipe at a flow rate of 500 sccm. Under this condition, the glass pipe was heated with a heat source up to 1,150 °C to remove metallic impurities.

6) A portion in the vicinity of the gas-discharging end of the glass pipe in the drying step was heated with the heat source to seal it by fusion.

7) The inside of the glass pipe was evacuated with a vacuum pump to attain a vacuum with a pressure of less than 0.01 kPa. Under this condition, a dried $N_2$ gas was introduced into the glass pipe. Then, the operation of the vacuum pump was stopped to raise the pressure to 105 kPa. This cycle was repeated three times to desorb the adsorbed gas (mainly $H_2O$) from the surface of the glass rod and the inner surface of the glass pipe.

8) The glass pipe and the glass rod were unified by collapsing the glass pipe to obtain a glass body having a diameter of about 24.3 mm and a length of 400 mm. During this collapsing operation, a $Cl_2$ gas was introduced into the glass pipe at a rate of 500 sccm and an $O_2$ gas, at a rate of 500 sccm. The internal pressure of the glass pipe was -1 kPa against atmospheric pressure. During this collapsing operation, the temperature of the outer surface of the glass pipe was 1,600 °C when measured with a radiation thermometer.

9) Silica glass doped with about 1.0 wt. % fluorine was synthesized over the circumference of the glass body by using the OVD method. This operation increased the ratio "D/2a" to 15, where "D" is the outer diameter of the cladding region and "2a" is the diameter of the core region. Thus, an optical fiber preform was produced.

10) The optical fiber preform was drawn to obtain an optical fiber having a glass-portion diameter of 125 μm.

In this optical fiber, the increment in the transmission loss due to the OH group was 0.03 dB/km at a wavelength of 1.38 μm.

Comparative example 2

An optical fiber was produced with the same method as in Example 3 except that step 4) (the drying step) was omitted. In this optical fiber, the increment in the transmission loss due to the OH group was 2.0 dB/km at a wavelength of 1.38 μm.

Example 4

1) A glass body was produced through steps similar to 1) to 8) in Example 3. The glass body had a core region made of silica glass doped with 0.35 wt. % chlorine and a cladding region made of silica glass doped with 1.1 wt. % fluorine. The glass body had a diameter of about 44 mm and a length of 400 mm. The relative refractive-index difference of the core region to the cladding region was 0.39%.

2) The glass body was drawn to a diameter of 11.7 mm. Then, its circumference was ground by mechanical grinding to obtain a glass rod having a diameter of 6.4 mm and a length of 600 mm.

3) A silica-glass body doped with about 1.1 wt. % fluorine was produced with the VAD method. The body was processed into a glass pipe having an outer diameter of 43 mm, an inner diameter of 9 mm, and a length of about 500 mm. The glass pipe was to be used to form the outer cladding region. The pipe was gas phase-etched by heating it at about 1,500 °C while an $SF_6$ gas was blown through the pipe.

4) The glass rod prepared in 2) was inserted into the glass pipe prepared in 3).

5) A dried $N_2$ gas was blown into the glass pipe at a rate of 2,000 sccm from its one end. Under this condition, the gas inside the glass pipe was discharged from the other end such that the pressure inside the glass pipe could maintain slightly higher than the outside pressure. This operation maintained the internal pressure of the glass pipe at 103 kPa. During this operation, the glass pipe was heated with a tape heater at 170 °C. The heated range included not only the range to be heated at 550 °C or higher in the chemically purifying step, sealing step, and collapsing step to be performed afterward but also an additional length of 200 mm from each end of the foregoing heating range. The volume of the $N_2$ gas blown per minute was about 35 times the inner volume of the glass pipe in the heating range (about 60 $cm^3$). This blowing-away purging was maintained for one hour as the second drying step.

6) A $Cl_2$ gas was introduced into the glass pipe at a flow rate of 1,000 sccm. Under this condition, the glass pipe was heated up to 1,120 °C to remove metallic impurities.

7) A portion in the vicinity of the gas-discharging end of the glass pipe was sealed.

8) A cyclic purging was performed.

9) The glass pipe and the glass rod treated in 8) were unified by collapsing the glass pipe to obtain an optical fiber preform having a diameter of 42 mm and a length of 400 mm. The preform had a ratio, "D/2a," of 15, where "D" is the outer diameter of the cladding region and "2a" is the diameter of the core region. During this collapsing operation, a $Cl_2$ gas was introduced into the glass pipe at a rate of 100 sccm and an $O_2$ gas, at a rate of 900 sccm. The internal pressure of the glass pipe was -4 kPa against atmospheric pressure. During this collapsing operation, the temperature of the outer surface of the glass pipe was 1,500 °C.

10) The optical fiber preform was drawn to obtain an optical fiber having a glass-portion diameter of 125 μm.

In this optical fiber, the increment in the transmission loss due to the OH group was 0.02 dB/km at a wavelength of 1.38 μm. Unlike the glass body in 8) of Example 3, the glass body in 1) of Example 4 was not directly heated with an oxyhydrogen flame. This is the reason why the optical fiber in Example 4 had an increment in the transmission loss smaller than that of the optical fiber in Example 3.

Comparative example 3

An optical fiber was produced with the same method as in Example 4 except that the drying steps were omitted. In this optical fiber, the increment in the transmission loss due to the OH group was 1.5 dB/km at a wavelength of 1.38 μm.

In Examples 1 to 4, a tape heater or a mantle heater was used as the heat source in the drying step. However, other heat sources such as an induction furnace, a resistance furnace, and a laser may also be used. An oxyhydrogen-flame burner or a plasma-flame burner was used in the collapsing step. However, other heat sources such as an induction furnace and a resistance furnace may also be used. Instead of the horizontal glass-processing lathe, a vertical apparatus may also be used. When a vertical apparatus whose heat source has an axially symmetrical temperature distribution is used, it is not necessary to rotate the glass pipe and the glass rod. The glass pipe and the glass rod may be produced by using any of the well-known methods in this technical field, such as the VAD method, OVD method, MCVD method, and collapsing process. The surface purification and the size adjustment of the glass pipe and the glass rod may be performed by chemical etching (gas phase or liquid phase) in place of mechanical grinding.

**Claims**

1. A method of producing an optical fiber preform by collapsing a glass pipe to obtain a solid body, the method comprising:

(a) a drying step to heat the glass pipe at a temperature of 550° C or below;

(b) a sealing step to seal one end of the glass pipe; and

(c) a collapsing step to collapse the glass pipe to obtain a solid body.

2. A method of producing an optical fiber preform as defined by claim 1, wherein in the drying step, the glass pipe is heated at a temperature of 60° C or above.

3. A method of producing an optical fiber preform as defined by claim 1, wherein in the drying step, the glass pipe is heated at a temperature of 300° C or above.

4. A method of producing an optical fiber preform as defined by claim 1, wherein in the drying step, the glass pipe is first heated at a temperature of 60° C or above and lower than 200° C and then heated at a temperature of 300° C or above.

5. A method of producing an optical fiber preform as defined by any of claims 1 to 4, wherein in the drying step, the glass pipe is heated in a longitudinal range including and wider than the longitudinal range to be heated at a temperature of 550° C or above in the collapsing step.

6. A method of producing an optical fiber preform as defined by any of claims 1 to 5, wherein in the drying step, a gas containing hydrogen atom-containing substances at a concentration of 10 vol. ppm or less is blown through the inside of the glass pipe.

7. A method of producing an optical fiber preform as defined by claim 6, wherein in the drying step, the volume of the gas blown per minute is at least 10 times the inner volume of the glass pipe in the longitudinal range heated in the drying step.

8. A method of producing an optical fiber preform as defined by any of claims 1 to 7, the method further comprising, before the drying step, a connecting step to connect a holding pipe to at least one end of the glass pipe.

9. A method of producing an optical fiber preform as defined by any of claims 1 to 8, wherein in the drying step, a pressure-changing cycle is performed at least once, the cycle comprising:

(a) a first stage in which the gas in the glass pipe is discharged to reduce the pressure inside the glass pipe; and

(b) a second stage in which a dried gas is introduced into the glass pipe to raise the pressure inside the glass pipe.

10. A method of producing an optical fiber preform as defined by claim 8, wherein the holding pipe contains OH groups at a concentration of 10 wt. ppm or less.

11. A method of producing an optical fiber preform as defined by claim 8, wherein the holding pipe is provided with a portion that radiates to the outside of the pipe the infrared rays travelling through the solid portion forming the wall of the pipe.

12. A method of producing an optical fiber preform as defined by any of claims 1 to 11, wherein in the drying step, the absolute pressure in the glass pipe is reduced to 4 kPa or below in at least one part of the drying step.

13. A method of producing an optical fiber preform as defined by any of claims 1 to 12, wherein the drying step is performed for at least one hour.

14. A method of producing an optical fiber preform as defined by any of claims 1 to 13, the method further comprising, before the drying step, a glass-depositing step to deposit a glass layer on the inner surface of the glass pipe.

15. A method of producing an optical fiber preform as defined by any of claims 1 to 14, the method further comprising, before the drying step, an assembling step to insert a glass rod into the glass pipe.

16. A method of producing an optical fiber preform as defined by any of claims 1 to 15, the method further comprising, before the drying step, an etching step to gas phase-etch the inner surface of the glass pipe.

17. A method of producing an optical fiber preform as defined by claim 16, the method further comprising, before the etching step, a preliminary drying step to dry the inside of the glass pipe.

18. A method of producing an optical fiber preform as defined by claim 16 or 17, wherein in the etching step, the etching is performed in a longitudinal range including and wider than the longitudinal range to be heated at a temperature of 550 °C or above in a step or steps to be performed afterward.

19. A method of producing an optical fiber preform as defined by any of claims 1 to 18, the method further comprising, after the drying step, a chemically purifying step to heat the glass pipe while a gas containing chlorine-element-containing substances is blown through the inside of the glass pipe.

20. A method of producing an optical fiber preform as defined by claim 19, the method further comprising, after the chemically purifying step, an additional drying step to dry the inside of the glass pipe.

21. A method of producing an optical fiber preform as defined by any of claims 1 to 20, wherein after the sealing step, a pressure-changing cycle is performed at least once, the cycle comprising:

> (a) a first stage in which the gas in the glass pipe is discharged to reduce the pressure inside the glass pipe; and
> (b) a second stage in which a dried gas is introduced into the glass pipe to raise the pressure inside the glass pipe.

22. A method of producing an optical fiber preform as defined by any of claims 1 to 21, wherein in the collapsing step, the absolute pressure in the glass pipe is maintained at 4 kPa or below.

23. A method of producing an optical fiber preform by inserting a glass rod into a glass pipe to unify them, the method comprising the steps of:

> (a) gas phase-etching the inner surface of a glass pipe;
> (b) inserting a glass rod into the glass pipe;
> (c) blowing a gas, containing hydrogen atom-containing substances at a concentration of 10 vol. ppm or less in total, through the inside of the glass pipe while the glass pipe and the glass rod are heated at a temperature of 60 to 550 °C;
> (d) heating the glass pipe while blowing a gas containing chlorine atom-containing substances into the glass pipe;
> (e) sealing one end of the glass pipe; and
> (f) heating the glass pipe and the glass rod to unify them while maintaining the absolute pressure in the glass pipe at 4 kPa or below.

**Patentansprüche**

1. Verfahren zum Herstellen eines Lichtleiter-Vorformlings durch Kollabieren eines Glasrohrs, um einen Festkörper zu erhalten, mit:

> (a) einem Trocknungsschritt, um das Glasrohr auf eine Temperatur von 550°C oder niedriger zu erwärmen;
>
> (b) einem Verschließschritt, um ein Ende des Glasrohrs zu verschließen; und
>
> (c) einem Kollabierschritt, um das Glasrohr zu kollabieren, um so einen Festkörper zu erhalten.

2. Verfahren zum Herstellen eines Lichtleiter-Vorformlings nach Anspruch 1, bei dem in dem Trocknungsschritt das Glasrohr auf eine Temperatur von 60°C oder höher erwärmt wird.

3. Verfahren zum Herstellen eines Lichtleiter-Vorformlings nach Anspruch 1, bei dem in dem Trocknungsschritt das Glasrohr auf eine Temperatur von 300°C oder höher erwärmt wird.

4. Verfahren zum Herstellen eines Lichtleiter-Vorformlings nach Anspruch 1, bei dem in dem Trocknungsschritt das Glasrohr zuerst auf eine Temperatur von 60°C oder höher und niedriger als 200°C und anschließend auf eine Temperatur von 300°C oder höher erwärmt wird.

5. Verfahren zum Herstellen eines Lichtleiter-Vorformlings nach einem der Ansprüche 1 bis 4, bei dem in dem Trocknungsschritt das Glasrohr in einem Längsbereich erwärmt wird, der den Längsbereich einschließt und breiter als dieser ist, welcher in dem Kollabierschritt auf eine Temperatur von 550°C oder höher erwärmt wird.

6. Verfahren zum Herstellen eines Lichtleiter-Vorformlings nach einem der Ansprüche 1 bis 5, bei dem in dem Trocknungsschritt ein Gas durch das Innere des Glasrohrs geblasen wird, welches wasserstoffatomhaltige Substanzen mit einer Konzentration von 10 Vol. ppm oder weniger enthält.

7. Verfahren zum Herstellen eines Lichtleiter-Vorformlings nach Anspruch 6, bei dem in dem Trocknungsschritt das Volumen des durchgeblasenen Gases pro Minute mindestens das Zehnfache des Innenvolumens des Glasrohrs in dem bei dem Trocknungsschritt erwärmten Längsbereich beträgt.

8. Verfahren zum Herstellen eines Lichtleiter-Vorformlings nach einem der Ansprüche 1 bis 7, ferner mit einem Verbindungsschritt, und zwar vor dem Trocknungsschritt, um ein Halterohr mit zumindest einem Ende des Glasrohrs zu verbinden.

9. Verfahren zum Herstellen eines Lichtleiter-Vorformlings nach einem der Ansprüche 1 bis 8, bei dem in dem Trocknungsschritt ein Druckänderungszyklus mindestens einmal durchlaufen wird, wobei der Zyklus

> (a) eine erste Phase, in der das Gas in dem Glasrohr ausgelassen wird, um den Druck innerhalb des Glasrohrs zu verringern; und
> (b) eine zweite Phase, in der ein Trockengas in das Glasrohr eingeführt wird, um den Druck innerhalb des Glasrohrs zu erhöhen,

aufweist.

10. Verfahren zum Herstellen eines Lichtleiter-Vorformlings nach Anspruch 8, bei dem das Halterohr OH-Gruppen mit einer Konzentration von 10 wt. ppm oder weniger umfasst.

11. Verfahren zum Herstellen eines Lichtleiter-Vorformlings nach Anspruch 8, bei dem das Halterohr mit einem Abschnitt versehen ist, der zur Außenseite des Rohrs hin Infrarotstrahlen abstrahlt, die durch den Festkörperabschnitt verlaufen, der die Wand des Rohrs bildet.

12. Verfahren zum Herstellen eines Lichtleiter-Vorformlings nach einem der Ansprüche 1 bis 11, bei dem in dem Trocknungsschritt der absolute Druck in dem Glasrohr auf 4 kPa oder niedriger bei mindestens einem Abschnitt des Trocknungsschrittes verringert wird.

13. Verfahren zum Herstellen eines Lichtleiter-Vorformlings nach einem der Ansprüche 1 bis 12, bei dem der Trocknungsschritt für mindestens eine Stunde durchgeführt wird.

14. Verfahren zum Herstellen eines Lichtleiter-Vorformlings nach einem der Ansprüche 1 bis 13, ferner mit einem Glasabscheideschritt, und zwar vor dem Trocknungsschritt, um eine Glasschicht auf die Innenoberfläche des Glasrohrs abzuscheiden.

15. Verfahren zum Herstellen eines Lichtleiter-Vorformlings nach einem der Ansprüche 1 bis 14, ferner mit einem Montageschritt, und zwar vor dem Trocknungsschritt, um einen Glasstab in das Glasrohr einzuführen.

16. Verfahren zum Herstellen eines Lichtleiter-Vorformlings nach einem der Ansprüche 1 bis 15, ferner mit einem Ätzschritt, und zwar vor dem Trocknungsschritt, um die Innenoberfläche des Glasrohrs zu gasphasenätzen.

17. Verfahren zum Herstellen eines Lichtleiter-Vorformlings nach Anspruch 16, des weiteren mit einem vorgelagerten Trocknungsschritt, und zwar vor dem Ätzschritt, um die Innenseite des Glasrohrs zu trocknen.

18. Verfahren zum Herstellen eines Lichtleiter-Vorformlings nach Anspruch 16 oder 17, bei dem in dem Ätzschritt das Ätzen in einem Längsbereich durchgeführt wird, der den Längsbereich einschließt und breiter als dieser ist, der in einem Schritt oder Schritten, die anschließend durchgeführt werden, auf eine Temperatur von 550°C oder höher erwärmt wird.

19. Verfahren zum Herstellen eines Lichtleiter-Vorformlings nach einem der Ansprüche 1 bis 18, des weiteren mit einem chemischen Reinigungsschritt, und zwar nach dem Trocknungsschritt, um das Glasrohr zu erwärmen, während ein Gas, das chlorhaltige Substanzen enthält, durch die Innenseite des Glasrohrs geblasen wird.

20. Verfahren zum Herstellen eines Lichtleiter-Vorformlings nach Anspruch 19, ferner mit einem zusätzlichen Trocknungsschritt, und zwar nach dem chemischen Reinigungsschritt, um die Innenseite des Glasrohrs zu trocknen.

21. Verfahren zum Herstellen eines Lichtleiter-Vorformlings nach einem der Ansprüche 1 bis 20, bei dem nach dem Verschlussschritt ein Druckänderungszyklus mindestens einmal durchgeführt wird, wobei der Zyklus:

    (a) eine erste Phase, in der das Gas in dem Glasrohr ausgelassen wird, um den Druck innerhalb des Glasrohrs zu verringern; und

    (b) eine zweite Phase, in der ein Trockengas in das Glasrohr eingeführt wird, um den Druck innerhalb des Glasrohrs zu erhöhen,

    aufweist.

22. Verfahren zum Herstellen eines Lichtleiter-Vorformlings nach einem der Ansprüche 1 bis 21, bei dem in dem Kollabierschritt der absolute Druck in dem Glasrohr auf 4 kPa oder niedriger gehalten wird.

23. Verfahren zum Herstellen eines Glasfaser-Vorformlings durch Einführen eines Glasstabs in ein Glasrohr, um diese zu vereinigen, mit den Schritten:

    (a) Gasphasenätzen der Innenoberfläche eines Glasrohrs;

    (b) Einführen eines Glasstabs in das Glasrohr;

    (c) Blasen eines Gases, das wasserstoffatomhaltige Substanzen mit einer Gesamtkonzentration von 10 vol. ppm oder weniger enthält, durch die Innenseite des Glasrohrs, während das Glasrohr und der Glasstab auf eine Temperatur von 60 bis 550°C erwärmt werden;

    (d) Erwärmen des Glasrohrs, während ein Gas, das chlorhaltige Substanzen enthält, in das Glasrohr geblasen werden;

    (e) Verschließen von einem Ende des Glasrohrs; und

(f) Erwärmen des Glasrohrs und des Glasstabs, um diese zu vereinigen, während der absolute Druck in dem Glasrohr auf 4 kPa oder niedriger gehalten wird.

## Revendications

1. Procédé de fabrication d'une préforme de fibre optique par compactage d'un tube de verre pour obtenir un corps solide, le procédé comprenant :

   (a) une étape de séchage pour chauffer le tube de verre à une température de 550 ° C ou moins ;
   (b) une étape d'étanchéisation pour étanchéifier une extrémité du tube de verre ; et
   (c) une étape de compactage pour compacter le tube de verre pour obtenir un corps solide.

2. Procédé de fabrication d'une préforme de fibre optique selon la revendication 1, dans lequel pendant l'étape de séchage, le tube de verre est chauffé à une température de 60° C ou plus.

3. Procédé de fabrication d'une préforme de fibre optique selon la revendication 1, dans lequel pendant l'étape de séchage, le tube de verre est chauffé à une température de 300° C ou plus.

4. Procédé de fabrication d'une préforme de fibre optique selon la revendication 1, dans lequel pendant l'étape de séchage, le tube de verre est tout d'abord chauffé à une température de 60 ° C ou plus et inférieure à 200 °C et ensuite chauffé à une température de 300 ° C ou plus.

5. Procédé de fabrication d'une préforme de fibre optique selon l'une quelconque des revendications 1 à 4, dans lequel pendant l'étape de séchage, le tube de verre est chauffé dans une plage longitudinale comprenant et plus large que la plage longitudinale devant être chauffée à une température de 550°C ou plus pendant l'étape de compactage.

6. Procédé de fabrication d'une préforme de fibre optique selon l'une quelconque des revendications 1 à 5, dans lequel pendant l'étape de séchage, un gaz contenant des substances contenant des atomes d'azote à une concentration de 10 ppm en volume ou moins est soufflé à l'intérieur du tube de verre.

7. Procédé de fabrication d'une préforme de fibre optique selon la revendication 6, dans lequel pendant l'étape de séchage, le volume du gaz soufflé par minute est au moins 10 fois le volume interne du tube de verre dans la plage longitudinale chauffée pendant l'étape de séchage.

8. Procédé de fabrication d'une préforme de fibre optique selon l'une quelconque des revendications 1 à 7, le procédé comprenant en outre, avant l'étape de séchage, une étape de connexion pour connecter un tuyau de maintien à au moins une extrémité du tube de verre.

9. Procédé de fabrication d'une préforme de fibre optique selon l'une quelconque des revendications 1 à 8, dans lequel pendant l'étape de séchage, un cycle de changement de pression est effectué au moins une fois, le cycle comprenant :

   (a) un premier niveau dans lequel le gaz dans le tube de verre est évacué pour réduire la pression à l'intérieur du tube de verre ; et
   (b) un second niveau dans lequel un gaz sec est introduit dans le tube de verre pour élever la pression à l'intérieur du tube de verre.

10. Procédé de fabrication d'une préforme de fibre optique selon la revendication 8, dans lequel le tube de maintien contient des groupes OH à une concentration de 10 ppm en poids ou moins.

11. Procédé de fabrication d'une préforme de fibre optique selon la revendication 8, dans lequel le tube de maintien est muni d'une partie qui fait rayonner vers l'extérieur du tube les rayons infrarouges traversant la partie solide formant la paroi du tube.

12. Procédé de fabrication d'une préforme de fibre optique selon l'une quelconque des revendications 1 à 11, dans lequel pendant l'étape de séchage, la pression absolue dans le tube de verre est réduite à 4 kPa ou moins pendant au moins une partie de l'étape de séchage.

13. Procédé de fabrication d'une préforme de fibre optique selon l'une quelconque des revendications 1 à 12, dans lequel l'étape de séchage est effectuée pendant au moins une heure.

14. Procédé de fabrication d'une préforme de fibre optique selon l'une quelconque des revendications 1 à 13, le procédé comprenant en outre, avant l'étape de séchage, une étape de dépôt de verre pour déposer une couche de verre sur la surface intérieure du tube de verre.

15. Procédé de fabrication d'une préforme de fibre optique selon l'une quelconque des revendications 1 à 14, le procédé comprenant en outre, avant l'étape de séchage, une étape d'assemblage pour insérer une tige de verre dans le tube de verre.

16. Procédé de fabrication d'une préforme de fibre optique selon l'une quelconque des revendications 1 à 15, le procédé comprenant en outre, avant l'étape de séchage, une étape de gravure à l'acide pour graver à l'acide en phase gazeuse la surface intérieure du tube de verre.

17. Procédé de fabrication d'une préforme de fibre optique selon la revendication 16, le procédé comprenant en outre, avant l'étape de gravure à l'acide, une étape de séchage préliminaire pour sécher l'intérieur du tube de verre.

18. Procédé de fabrication d'une préforme de fibre optique selon la revendication 16 ou 17, dans lequel pendant l'étape de gravure à l'acide, la gravure à l'acide est effectuée dans une plage longitudinale comprenant et plus large que la plage longitudinale devant être chauffée à une température de 550 °C ou plus en une étape ou plusieurs étapes devant être effectuées ensuite.

19. Procédé de fabrication d'une préforme de fibre optique selon l'une quelconque des revendications 1 à 18, le procédé comprenant en outre, après l'étape de séchage, une étape de purification chimique pour chauffer le tube de verre pendant qu'un gaz contenant des substances contenant des éléments chlorés est soufflé à l'intérieur du tube de verre.

20. Procédé de fabrication d'une préforme de fibre optique selon la revendication 19, le procédé comprenant en outre, après l'étape de purification chimique, une étape de séchage supplémentaire pour sécher l'intérieur du tube de verre.

21. Procédé de fabrication d'une préforme de fibre optique selon l'une quelconque des revendications 1 à 20, dans lequel après l'étape d'étanchéisation, un cycle de changement de pression est effectué au moins une fois, le cycle comprenant :

    (a) un premier niveau dans lequel le gaz dans le tube de verre est évacué pour réduire la pression à l'intérieur du tube de verre ; et
    (b) un second niveau dans lequel un gaz sec est introduit dans le tube de verre pour élever la pression à l'intérieur du tube de verre.

22. Procédé de fabrication d'une préforme de fibre optique selon l'une quelconque des revendications 1 à 21, dans lequel pendant l'étape de compactage, la pression absolue dans le tube de verre est maintenue à 4 kPa ou moins.

23. Procédé de fabrication d'une préforme de fibre optique par l'insertion d'une tige de verre dans un tube de verre pour les unifier, le procédé comprenant les étapes consistant à :

(a) graver à l'acide en phase gazeuse la surface intérieure du tube de verre ;
(b) insérer une tige de verre dans le tube de verre ;
(c) souffler un gaz, contenant des substances contenant des atomes d'azote à une concentration de 10 ppm en volume ou moins au total, à l'intérieur du tube de verre pendant que le tube de verre et la tige de verre sont chauffés à une température de 60 à 550 ° C ;
(d) chauffer un tube de verre pendant le soufflage d'un gaz contenant des substances contenant des atomes chlorés dans le tube de verre ;
(e) étanchéiser une extrémité du tube de verre ; et
(f) chauffer le tube de verre et la tige de verre pour les unifier tout en maintenant la pression absolue dans le tube de verre à 4 kPa ou moins.

FIG. 1A

Dried gas

FIG. 1B

Dried gas

FIG. 2A

9 closed   1   10 open

9 open   1   10 closed

Dried gas

evacuation

5   6

5   6

EP 1 440 947 B1

FIG. 2B

FIG. 2C

FIG. 2D

FIG. 3

FIG. 4A

Dried gas
11
11
12
12
Dried gas
3

FIG. 4B

Dried gas
11
11
12
12
14
3

FIG. 4C

11
12
14
14
3

FIG. 5

Etching gas

FIG. 6

```
        Rod preparation
               ↓
    Pipe preparation & Etching
               ↓
         Assembling
               ↓
          Drying
               ↓
     Chemical purification
               ↓
          Sealing
               ↓
      Additional drying
               ↓
         Collapsing
               ↓
        Rod formation
               ↓
    Pipe preparation & Etching
               ↓
         Assembling
               ↓
          Drying
               ↓
     Chemical purification
               ↓
          Sealing
               ↓
      Additional drying
               ↓
         Collapsing
               ↓
         Jacketing
               ↓
          Drawing
```

FIG. 7

```
        ┌────────────────┐
        │ Rod preparation │
        └────────────────┘
                 ↓
     ┌──────────────────────────┐
     │ Pipe preparation & Etching │
     └──────────────────────────┘
                 ↓
      ┌───────────────────────┐
      │ Connecting holding pipe │
      └───────────────────────┘
                 ↓
       ┌──────────────────┐
       │ Preliminary drying │
       └──────────────────┘
                 ↓
            ┌─────────┐
            │ Etching │
            └─────────┘
                 ↓
 ┌────────────────────────────────────────────┐
 │ Assembling, Drying, & Chemical purification │
 └────────────────────────────────────────────┘
                 ↓
        ┌──────────────────────┐
        │ Sealing and Collapsing │
        └──────────────────────┘
                 ↓
          ┌───────────────┐
          │ Rod formation │
          └───────────────┘
                 ↓
         ┌──────────────────┐
         │ Pipe preparation │
         └──────────────────┘
                 ↓
      ┌───────────────────────┐
      │ Connecting holding pipe │
      └───────────────────────┘
                 ↓
       ┌──────────────────┐
       │ Preliminary drying │
       └──────────────────┘
                 ↓
            ┌─────────┐
            │ Etching │
            └─────────┘
                 ↓
         ┌──────────────────┐
         │ Glass deposition │
         └──────────────────┘
                 ↓
 ┌────────────────────────────────────────────┐
 │ Assembling, Drying, & Chemical purification │
 └────────────────────────────────────────────┘
                 ↓
        ┌───────────────────┐
        │ Sealing & Collapsing │
        └───────────────────┘
                 ↓
           ┌──────────┐
           │ Jacketing │
           └──────────┘
                 ↓
            ┌─────────┐
            │ Drawing │
            └─────────┘
```

FIG. 8

FIG. 9A

FIG. 9B

FIG. 10A

FIG. 10B

FIG. 11

FIG. 12

FIG. 13

FIG. 14

FIG. 15

FIG. 16

FIG. 17

FIG. 18